# EUROPEAN PATENT APPLICATION

(11) **EP 4 797 420 A1**
(43) Date of publication of application: **26.08.2026**
(21) Application number: 25873839.2
(22) Date of filing: 18.08.2025
(51) Int. Cl.: H01M 50/507, H01M 50/516, H01M 50/519, H01M 50/204

(54) **BUSBAR FRAME ASSEMBLY AND BATTERY MODULE INCLUDING SAME**

(30) Priority: 30.09.2024 KR 20240132602
(71) Applicant: LG Energy Solution, Ltd., Seoul 07335 (KR)
(72) Inventor: KIM, Minjun, Daejeon 34122 (KR)
(74) Representative: BCKIP Part mbB
(86) International application number: PCT/KR2025/012444
(87) International publication number: WO 2026/071477

(57) **Abstract**

A busbar frame assembly according to an embodiment of the present disclosure comprises a busbar connected to electrode leads of a plurality of battery cells; and a welding plate where the busbar and a weld are formed, wherein the busbar comprises a plurality of protruding parts, wherein the welding plate comprises a fastening hole into which the protruding parts are inserted, and wherein the weld is located between the plurality of protruding parts.

## Description

### TECHNICAL FIELD

### Cross-Reference to Related Applications

This application claims the benefit of priority based on Korean Patent Application No. 10-2024-0132602, filed on September 30, 2024, and all contents disclosed in the documents of the corresponding Korean Patent Application are incorporated as a part of this specification.

The present disclosure relates to a busbar frame assembly and a battery module including the same, and more particularly, to a busbar frame assembly having improved mechanical rigidity and stability of electrical connection, and a battery module including the same.

### BACKGROUND

In modern society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the necessity for development of the secondary battery is increasing.

Currently commercialized secondary batteries include a nickel cadmium battery, a nickel hydrogen battery, a nickel zinc battery, a lithium secondary battery, and the like. Among these batteries, the lithium secondary battery has come into the spotlight because it has advantages, for example, hardly exhibiting memory effects compared to nickel-based secondary batteries and thus being freely charged and discharged, and having very low self-discharge rate and high energy density.

Such a lithium secondary battery mainly uses lithium-based oxide and a carbon material as a positive electrode active material and a negative electrode active material, respectively. The lithium secondary battery includes an electrode assembly in which a positive electrode plate and a negative electrode plate respectively coated with the positive electrode active material and the negative electrode active material are disposed with a separator being interposed between them, and a battery case which seals and accommodates the electrode assembly together with an electrolyte.

In general, the lithium secondary battery may be classified into a can-type secondary battery in which the electrode assembly is embedded in a metal can, and a pouch-type secondary battery in which the electrode assembly is embedded in a pouch of an aluminum laminate sheet, according to the shape of the exterior material.

In the case of the secondary batteries used in small-sized devices, two or three battery cells are disposed, but in the case of the secondary batteries used in medium and large-sized devices, such as automobiles, a battery module in which the plurality of battery cells are electrically connected is used. The plurality of battery cells are connected to each other in series or in parallel to form a cell assembly, so that the battery module has improved capacity and output. Further, one or more battery modules may be mounted together with various control and protection systems, such as a BDU(Battery Disconnect Unit), a BMS (Battery Management System) and a cooling system to form a battery pack.

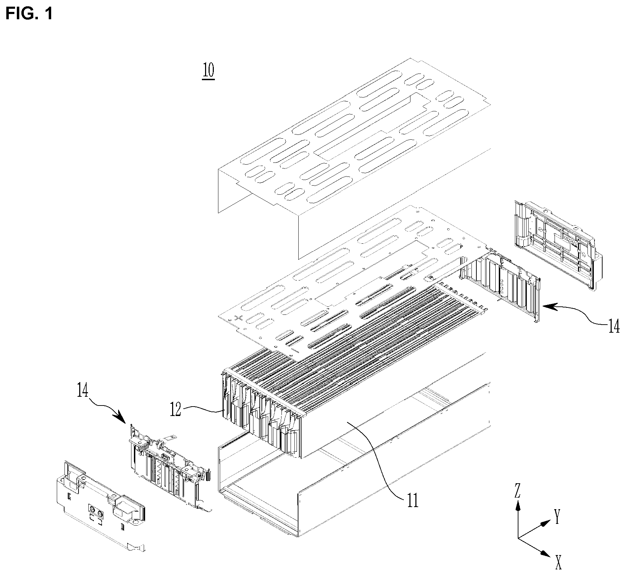

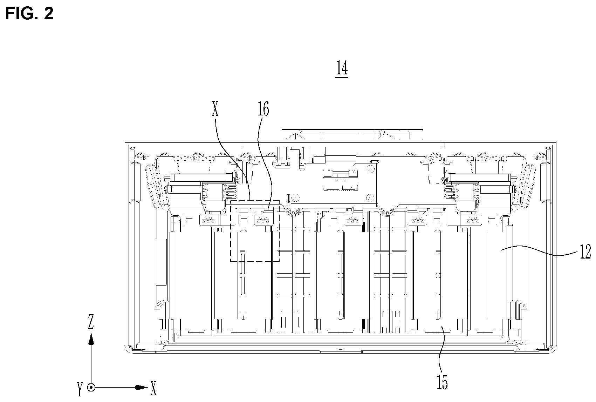

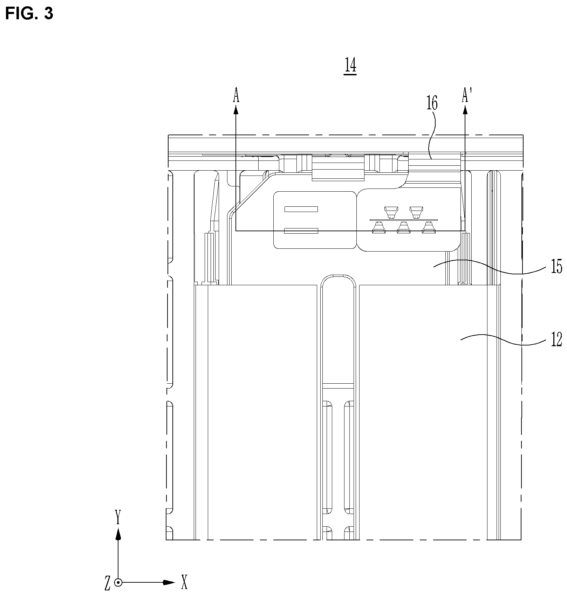

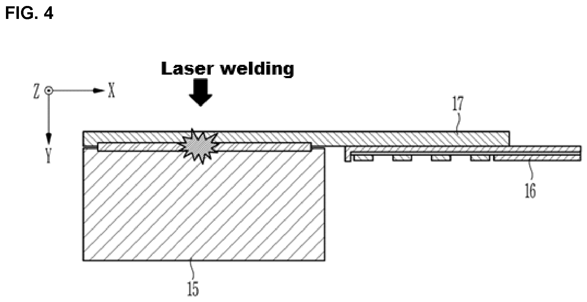

FIG. 1 is a perspective view showing a conventional battery module 10. FIG. 2 is a plan view showing a conventional busbar frame assembly 14. FIG. 3 is an enlarged partial view showing a portion "X" of FIG. 2. FIG. 4 is a cross-sectional view showing a cross section taken along the cutting line A-A' of FIG. 3.

In order to sense information of respective battery cells 11 in a conventional battery module 10, it is necessary to go through the sequence of an electrode lead 12 of battery cells 11, a busbar 15, a flexible printed circuit (FPC) board 16, and a connector (not shown). To achieve this, a separate welding plate 17 must be added, thereby performing connection between a welding plate 17 and a flexible printed circuit board 16 through a crimping process, and performing connection between a welding plate 17 and a busbar 15 through a welding process.

However, if the welding plate 17 and the busbar 15 are not stably fixed, this causes problems such as a decrease in contact resistance and bonding strength. Therefore, studies on a method for stably coupling between the welding plate 17 and the busbar 15 have been pursued.

### DETAILED DESCRIPTION OF THE INVENTION

### Technical Problem

It is an object of the present disclosure to secure mechanical rigidity and stability of electrical connection between a busbar and a welding plate, and to provide a busbar frame assembly having improved mechanical rigidity and stability of electrical connection, and a battery module including the same.

However, the technical objects to be solved by embodiments of the present disclosure are not limited to the above-described objects, and can be variously expanded within the scope of the technical idea included in the present disclosure.

### Technical Solution

According to an aspect of the present disclosure, provided is a busbar frame assembly comprising: a busbar connected to electrode leads of a plurality of battery cells; and a welding plate where the busbar and a weld are formed, wherein the busbar comprises a plurality of protruding parts, wherein the welding plate comprises a fastening hole into which the protruding parts are inserted, and wherein the weld is located between the plurality of protruding parts.

In an embodiment, the protruding part and the fastening hole may be soldered together.

In an embodiment, the soldering part and the weld may be formed by the same heat source.

In an embodiment, the soldering part and the weld may be formed simultaneously.

In an embodiment, the soldering part may physically couple the protruding part and the fastening hole.

In an embodiment, the protruding part may comprise a first protruding part and a second protruding part that face each other with the weld interposed therebetween.

In an embodiment, the weld may comprise a first weld adjacent to the first protruding part and a second weld adjacent to the second protruding part.

In an embodiment, the fastening hole may be formed to correspond to the shape of the protruding part.

In an embodiment, the busbar frame assembly may further comprise a printed circuit board (PCB) for voltage sensing of the battery cells, wherein the printed circuit board may be contacted and connected to the welding plate.

In an embodiment, the welding plate may have a plate shape.

In an embodiment, the busbar frame assembly may further comprise a busbar frame to which the busbar and the welding plate are mounted.

In an embodiment, the busbar and the welding plate may be mounted on a surface opposite to the surface that faces the battery cell among the busbar frame.

According to another aspect of the present disclosure, provided a battery module comprising at least one busbar frame assembly described above.

### Advantageous Effects

According to embodiments of the present disclosure, a protruding part and a fastening hole are coupled between a busbar and a welding plate and additionally are soldered together, thereby ensuring electrical stability and mechanical rigidity.

The effects of the present disclosure are not limited to the effects mentioned above, and additional other effects not described above will be clearly understood from the description of the appended claims by those skilled in the art.

### BRIEF DESCRIPTION OF THE DRAWINGS

FIG. 1 is a perspective view showing a conventional battery pack.
FIG. 2 is a plan view showing a conventional busbar frame assembly 14.
FIG. 3 is an enlarged partial view showing a portion "X" of FIG. 2.
FIG. 4 is a cross-sectional view showing a cross section taken along the cutting line A-A' of FIG. 3.
FIG. 5 is a perspective view showing a battery module according to an embodiment of the present disclosure.
FIG. 6 is a plan view showing a busbar frame assembly according to an embodiment of the present disclosure.
FIG. 7 is an enlarged partial view showing a portion "Y" of FIG. 6.
FIG. 8 is a cross-sectional view showing a cross section of a busbar taken along the cutting line B-B' of FIG. 7.
FIG. 9 is a cross-sectional view showing a cross section of a welding plate taken along the cutting line B-B' of FIG. 7.
FIG. 10 is a cross-sectional view showing a cross-section taken along the cutting line B-B' of FIG. 7.
FIG. 11 is a cross-sectional view showing a cross section taken along the cutting line C-C' of FIG. 5.

### DETAILED DESCRIPTION OF THE EMBODIMENTS

Hereinafter, various embodiments of the present disclosure will be described in detail with reference to the accompanying drawings so that those skilled in the art can easily implement them. The present disclosure may be modified in various different ways, and is not limited to the embodiments set forth herein.

Portions that are irrelevant to the description will be omitted to clearly describe the present disclosure, and like reference numerals designate like elements throughout the specification.

Further, in the drawings, the size and thickness of each element are arbitrarily illustrated for convenience of description, and the present disclosure is not necessarily limited to those illustrated in the drawings. In the drawings, the thickness of layers, areas, etc. are exaggerated for clarity. In the drawings, for convenience of description, the thicknesses of a part and a region are shown to be exaggerated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity.

Further, throughout the specification, when a portion is referred to as "including" a certain component, it means that the portion can further include other components, without excluding the other components, unless otherwise stated.

Further, throughout the specification, when referred to as "planar", it means when a target portion is viewed from the upper side, and when referred to as "cross-sectional", it means when a target portion is viewed from the side of a cross section cut vertically.

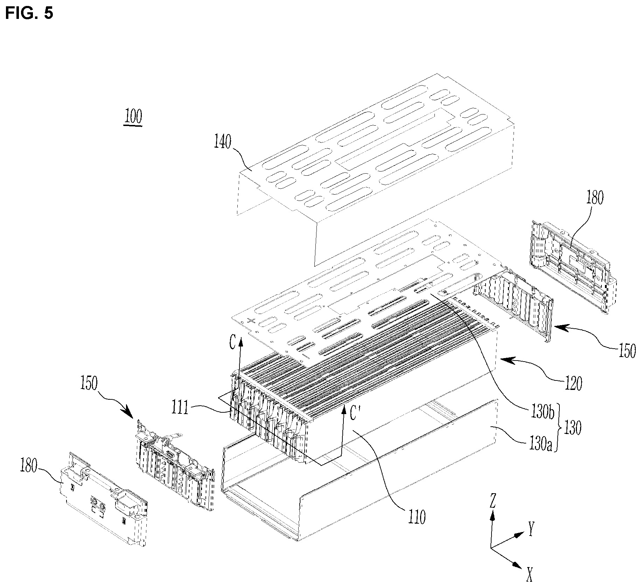

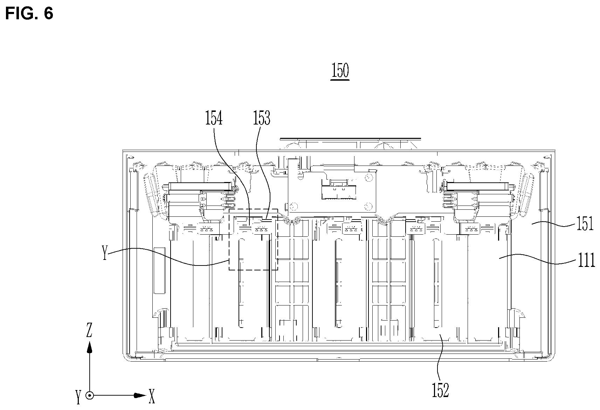

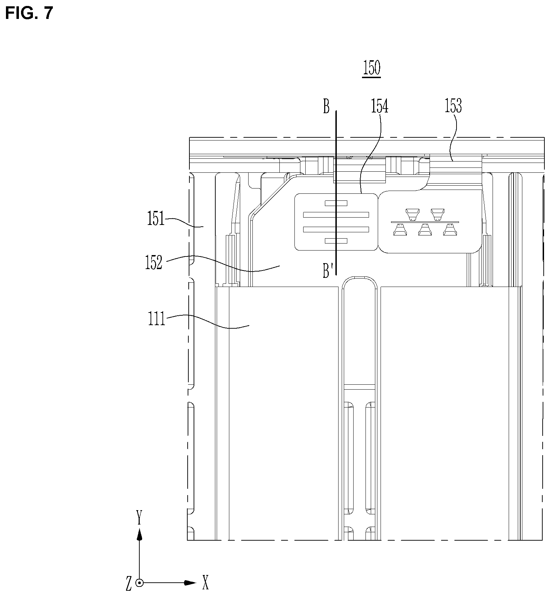

FIG. 5 is a perspective view showing a battery module according to an embodiment of the present disclosure. FIG. 6 is a plan view showing a busbar frame assembly 150 according to an embodiment of the present disclosure. FIG. 7 is an enlarged partial view showing a portion "Y" of FIG. 6.

Referring to FIGS. 5 to 7, a busbar frame assembly 150 according to an embodiment of the present disclosure includes a busbar 152 connected to electrode leads 111 of a plurality of battery cells 110; a printed circuit board (PCB) 153 for voltage sensing of the battery cells 110; and a welding plate 154 that connects the busbar 152 and the printed circuit board 153. The welding plate 154 electrically connects the busbar 152 and the printed circuit board 153.

As an example, the battery cell 110 is depicted as a pouch-type battery cell 110. The pouch-type battery cell 110 may be formed by accommodating the electrode assembly in a pouch case made of a laminate sheet including a resin layer and a metal layer, and then thermally fusing the sealing part of the pouch case. In this case, the battery cell 110 may be formed into a rectangular sheet-like structure. However, the battery cell 110 of the present disclosure is not limited to a pouch type.

In the battery cell stack 120, a plurality of battery cells 110 may be stacked in one direction. As an example, as shown in FIG. 5, the plurality of battery cells 110 may be stacked along the X-axis direction while standing upright so that one-side surfaces of the cell main body faces each other. Thereby, the electrode leads 111 may protrude in a direction perpendicular to the direction in which the battery cells 110 are stacked. For example, in the battery cell 110, one electrode lead 111 may protrude toward the Y-axis direction, and the other electrode lead 111 may protrude toward the -Y-axis direction.

The battery module 100 according to the present embodiment may include a module frame 130 that accommodates a battery cell stack 120, and end plates 180 that cover the front surface and rear surface of the battery cell stack 120, respectively. Here, the front surface and rear surface of the battery cell stack 120 may be both surfaces of the battery cell stack 120 along a direction in which the electrode leads 111 protrude from the battery cells 110. In other words, the battery module 100 according to the present embodiment includes a module frame 130 that accommodates the battery cell stack 120 and has an opened surface in a direction in which the electrode leads 111 protrude from the battery cell stack 120, and an end plate 180 that covers the opened surface of the module frame 130. Further, as shown in FIG. 5, the module frame 130 may be opened in both the Y-axis direction, which is a direction in which the electrode leads 111 protrude, and the -Y-axis direction. Two end plates 180 may cover the opened both directions of the module frame 130.

Further, as shown in FIG. 5, the module frame 130 according to an embodiment of the present disclosure may include a U-shaped frame 130a of which an upper surface, a front surface, and a rear surface are opened, and a top plate 130b that covers the upper part of the battery cell stack 120. However, the module frame 130 is not limited thereto, and may be replaced with a frame of another shape, such as an L-shaped frame or a mono-frame that surrounds the battery cell stack 120 except for the front and rear surfaces. That is, the module frame 130 may be formed as an integrated module frame 130 that is not separated into a U-shaped frame and a top plate.

According to the present embodiment, the battery module 100 may include a module frame cover 140 that covers an upper end of the module frame 130.

The end plates 180 may cover an opened surface of the module frame 130. The end plates 180 may be located on the front surface and rear surface of the battery cell stack 120. The end plates 180 may be formed outside the busbar frame assembly 150 on the basis of the battery cell stack 120 and may be formed to cover both the battery cell stack 120 and the busbar frame assembly 150. The end plates 180 may protect the busbar frame assembly 150 and various electrical components connected thereto from external impacts, and may have a battery module mounting structure. The end plates 180 may be coupled to the module frame 130 by welding.

According to the present embodiment, the busbar frame assemblies 150 may be located on the opened first side (Y-axis direction in FIG. 1) and second side (-Y-axis direction in FIG. 1) of the module frame 130 and formed to cover the battery cell stack 120. The busbar frame assemblies 150 may electrically connect the battery cells 110 constituting the battery cell stack 120 in series or parallel.

According to the present embodiment, the electrode leads 111 connected to the electrode assembly protrude outside the pouch case. The electrode leads 111 of each battery cell can be electrically connected to each other via a busbar 152. The busbar 152 is configured to guide electrical connection of the battery module 100, and its shape or material is not limited as long as it comprises a metal material with excellent electrical conductivity.

According to the present embodiment, the printed circuit board 153 is configured to sense voltage or thermal data of the battery cells 110. Thereby, the voltage data of each battery cell 110 may be sensed and transmitted to the outside.

The busbar 152 and the printed circuit board 153 are electrically connected by a welding plate 154.

Referring to FIG. 7, the welding plate 154 is configured such that one end is connected to the busbar 152 and the other end is connected to the printed circuit board 153. In an embodiment, the welding plate 154 and the printed circuit board 153 may be coupled through a crimping process. Coupling by the protruding part 160 and coupling by the weld 162 exist between the welding plate 154 and the busbar 152.

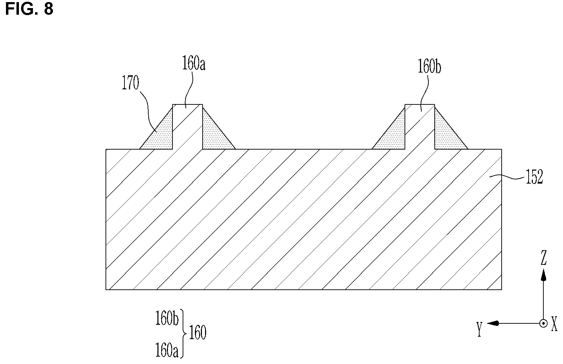

Referring to FIGS. 8 to 10, the coupling between the welding plate 154 and the busbar 152 will be described in detail.

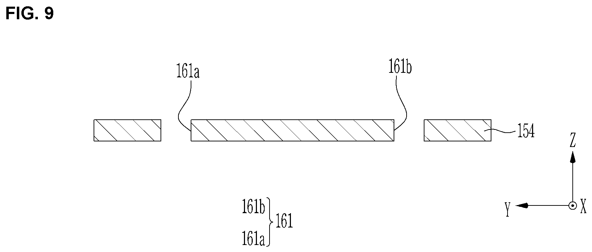

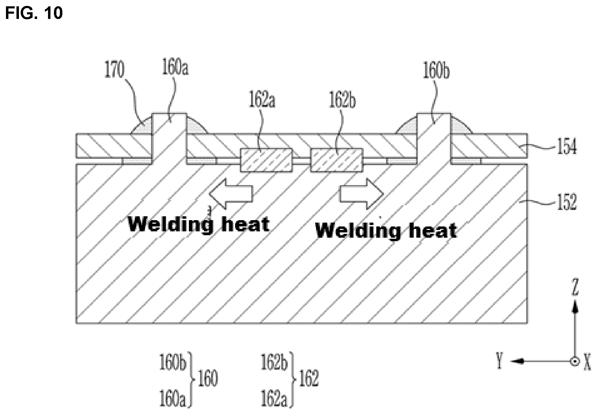

FIG. 8 is a cross-sectional view showing a cross section of a busbar taken along the cutting line B-B' of FIG. 7. FIG. 9 is a cross-sectional view showing a cross section of a welding plate taken along the cutting line B-B' of FIG. 7. FIG. 10 is a cross-sectional view showing a cross-section taken along the cutting line B-B' of FIG. 7.

Referring to FIGS. 8 to 10 together, a protruding part 160 is formed on the busbar 152. The protruding part 160 protrudes along the Z-axis direction, which is an upward direction from the surface of the busbar 152. In FIG. 8, the protruding part 160 is depicted as having a square shape, but may be modified to have a circular, triangular shape, or other shape, without being thereto.

The protruding part 160 may be provided in plural numbers, and for example, the protruding part may include a first protruding part 160a and a second protruding part 160b facing each other based on the Y-axis. However, without being limited thereto, three or more protruding parts 160 may be provided, and may be disposed to face each other based on the Y-axis.

The protruding parts 60 are inserted into the fastening holes 161 of the welding plate 154 stacked on an upper part of the busbar 152. The thickness of the protruding parts 160 may be formed thicker than that of the welding plate 154 to penetrate through the busbar 152.

In an embodiment, the welding plate 154 may be provided in a plate shape. The welding plate 154 is provided on the busbar 152 and welded to the busbar 152. Further, the welding plate 154 of the present disclosure is formed with a fastening hole 161 for coupling with the protruding part 160. The shape of the fastening hole 161 may correspond to the shape of the protruding part 160.

As the protruding part 160 is inserted into the fastening hole 161, the busbar 152 and the welding plate 154 may be physically coupled. The fastening holes 161 are provided in the same number as the protruding parts 160. As an example, FIG. 9 depicts that the fastening hole 161 is provided in plurality, and includes a first fastening hole 161a and a second fastening hole 161b facing each other based on the Y-axis. Further, the coupling between the protruding parts 160 and the fastening holes 161 may serve as a guide to stably fix the position during welding, before welding the busbar 152 and the welding plate 154.

Meanwhile, as shown in FIG. 8, a solder paste is applied to the protruding part 160 before the welding plate 154 is coupled to the busbar 152. Specifically, after applying a solder paste onto the protruding part 160 of the busbar 152, the welding plate 154 is stacked on the busbar 152 to insert the protruding part 160 into the fastening hole 161, and subsequently, the welding process between the busbar 152 and the welding plate 154 is carried out. The welding can be carried out, for example, by irradiating laser. As the solder paste is heated by the welding heat generated at this time, a soldering part 170 is formed to stably fix the protruding part 160 and the fastening hole 161. That is, the busbar 152 and the welding plate 154 are formed by the same heat source, namely, welding heat, and the weld 162 and the soldering part 170 are formed simultaneously through the welding process.

The weld 162 is formed between the first protruding part 160a and the second protruding part 160b based on the Y-axis direction. The weld 162 may include a first weld 162a adjacent to the first protruding part 160a and a second weld 162b adjacent to the second protruding part 160b. The first weld 162a and the second weld 162b may each have a shape extending along the X-axis direction.

In the present disclosure, a welds 162 as well as a soldering part 170 exist between the busbar 152 and the welding plate 154, which not only provide direct contact but also add an electrical connection path, thereby ensuring electrical stability. Further, since the protruding part 160 and the fastening hole 161 are soldered together, the busbar 152 and the welding plate 154 are physically fixed, thereby ensuring mechanical rigidity even under a condition that the busbar frame assembly 150 receives vibration or impact.

Referring again to FIGS. 5 and 6, the busbar frame assembly 150 according to an embodiment of the present disclosure may further include a busbar frame 151 on which the busbar 152, the welding plate 154 and the printed circuit board 153 are mounted.

In order to electrically connect a plurality of battery cells 110, a busbar 152 that electrically connects the electrode leads 111 of the battery cells 110 may be mounted on a busbar frame 151.

The busbar frame 151 may be a member that prevents the electrode leads 111 and the busbar 152 from contacting other parts of the battery cells 110 and causing a short circuit. The busbar frame 151 may include an electrically insulating material.

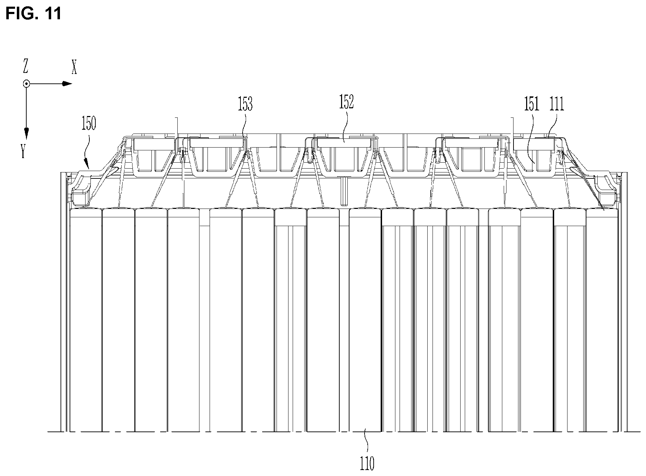

FIG. 11 is a cross-sectional view showing a cross section taken along the cutting line C-C' of FIG. 5.

Referring to FIG. 11, a busbar 152, a welding plate 154, and a printed circuit board 153 may be mounted on a surface opposite to the surface that faces the battery cell 110 among the busbar frame 151. Specifically, at least one busbar 152 may be mounted on one surface of the busbar frame 151, and the other surface of the busbar frame 151 may face the battery cells 110.

The electrode leads 111 may pass through slits formed in the busbar frame 151 and then be connected to the busbar 152. The busbar frame 151 is located between the battery cell 110 and the portion where the busbar 152 and electrode lead 111 are connected, so that the portion where the busbar 152 and electrode lead 111 are connected may be separated from the space in which the battery cell 110 is disposed. This structure makes it possible to prevent the electrode leads 111 from contacting adjacent electrode leads 111 or battery cells 110 and causing a short circuit.

Meanwhile, as shown in FIG. 5, a battery module 100 comprising a busbar frame assembly 150 is provided.

The battery module 100 can be electrically connected to other battery module, a BDU module, or a BMS module via a busbar frame assembly 150 connected to a terminal busbar.

The above-described battery cell 110 and battery module 100 are exemplary structures, and the type or shape of the battery cell 110 and battery module 100 included in a battery pack to which the busbar frame assembly 150 according to the present embodiment is applied is not particularly limited.

Although a pouch-type battery cell 110 has been described as an example, prismatic battery cells and cylindrical battery cells can also be applied to the battery module 100 according to an embodiment of the present disclosure. In addition, although a battery module 100 in which battery cells 110 are accommodated in a module frame 130 has been described as an example, a cell-to-pack (CTP) type battery module 100 in which a plurality of battery cells 110 are mounted to a battery pack without being accommodated in a module frame 130 may also be applied as an example of the present disclosure.

In the embodiments above, expressions indicating directions such as "front," "rear," "left," "right," "up," and "down" have been used, but these expressions are used only to facilitate the description, and may vary, for example, depending on the location of a target object or an observer.

Although preferred embodiments of the present disclosure have been shown and described above, the scope of the present disclosure is not limited thereto, and numerous other variations and modifications can be made to the embodiments by those skilled in the art using the basic principles of the invention defined in the appended claims, which also falls within the spirit and scope of the invention.

### [Description of Reference Numerals]

- 100:: battery module
- 110:: battery cell
- 111:: electrode lead
- 120:: battery cell stack
- 150:: busbar frame assembly
- 151:: busbar frame
- 152:: busbar
- 153:: printed circuit board
- 154:: welding plate
- 160:: protruding part
- 161:: fastening hole
- 162:: weld
- 170:: soldering part

## Claims

1. A busbar frame assembly comprising:
a busbar connected to electrode leads of a plurality of battery cells; and
a welding plate where the busbar and a weld are formed,
wherein the busbar comprises a plurality of protruding parts,
wherein the welding plate comprises a fastening hole into which the protruding parts are inserted, and
wherein the weld is located between the plurality of protruding parts.

2. The busbar frame assembly of claim 1,
wherein the protruding part and the fastening hole are soldered together.

3. The busbar frame assembly of claim 2,
wherein the soldering part and the weld are formed by the same heat source.

4. The busbar frame assembly of claim 2,
wherein the soldering part and the weld are formed simultaneously.

5. The busbar frame assembly of claim 2,
wherein the soldering part physically couples the protruding part and the fastening hole.

6. The busbar frame assembly of claim 1,
wherein the protruding part comprises a first protruding part and a second protruding part that face each other with the weld interposed therebetween.

7. The busbar frame assembly of claim 6,
wherein the weld comprises a first weld adjacent to the first protruding part and a second weld adjacent to the second protruding part.

8. The busbar frame assembly of claim 1,
wherein the fastening hole is formed to correspond to the shape of the protruding part.

9. The busbar frame assembly of claim 1,
further comprising a printed circuit board (PCB) for voltage sensing of the battery cells,
wherein the printed circuit board is contacted and connected to the welding plate.

10. The busbar frame assembly of claim 1,
wherein the welding plate has a plate shape.

11. The busbar frame assembly of claim 1,
further comprising a busbar frame to which the busbar and the welding plate are mounted.

12. The busbar frame assembly of claim 11, wherein the busbar and the welding plate are mounted on a surface opposite to the surface that faces the battery cell among the busbar frame.

13. A battery module comprising the busbar frame assembly of claim 1.
